Europäisches Patentamt

(19) European Patent Office

Office européen des brevets

(11) EP 0 959 044 A1

(12) EUROPEAN PATENT APPLICATION
published in accordance with Art. 158(3) EPC

(43) Date of publication:
24.11.1999 Bulletin 1999/47

(51) Int. Cl.$^6$: C01G 45/00, H01M 4/58,
H01M 10/40

(21) Application number: 98937847.6

(22) Date of filing: 17.08.1998

(86) International application number:
PCT/JP98/03652

(87) International publication number:
WO 99/08964 (25.02.1999 Gazette 1999/08)

(84) Designated Contracting States:
DE FR GB IT

(30) Priority: 18.08.1997 JP 22144797

(71) Applicants:
• Japan as represented by Director-General,
Agency of Industrial Science and Technology
Tokyo 100-8921 (JP)
• SAKAI CHEMICAL INDUSTRIAL COMPANY LTD.
Sakai-shi, Osaka 590-8502 (JP)

(72) Inventors:
• TABUCHI, Mitsuharu;
Osaka National Research Inst.
Osaka 563-8577 (JP) (JP)
• KOBAYASHI, Hironori;
Osaka National Research
Osaka 563-8577 (JP) (JP)

• ADO, Kazuaki;
Osaka National Research Institute
8-
(JP) (JP)
• KAGEYAMA, Hiroyuki;
Osaka National Research
Osaka 563-8577 (JP) (JP)
• FUKAI, Kiyoshi
Sakai Chemical Industries, Ltd.
Osaka 590-0985 (JP)
• KIRA, Yoshiyuki
Sakai Chemical Industries, Ltd.
Osaka 590-0985 (JP)

(74) Representative:
Cresswell, Thomas Anthony
J.A. KEMP & CO.
14 South Square
Gray's Inn
London WC1R 5LX (GB)

(54) PRODUCTION OF GRANULAR COMPOSITE LITHIUM/MANGANESE OXIDE COMPOSITION AND USE THEREOF FOR LITHIUM ION SECONDARY BATTERIES

(57) A method of producing a lithium/manganate composite oxide particulate composition, which comprises:

heating at least one manganese compound selected from a manganese oxide represented by the general formula (I):

$$MnO_y \cdot zH_2O$$

in which y represents a rational number of 1 to 2 and z represents a rational number of 0 to 1, excluding a case in which y=3/2 and z=1/2, and a basic manganese carbonate represented by the general formula (II):

$$Mn(OH)_a(CO_3)_b$$

in which a represents rational number of 0 to 2 and b represents a rational number of 0 to 1, in an aqueous solution of lithium hydroxide and then separating the same from the aqueous solution.

FIG. 3

## Description

Field of the Invention

The present invention relates to a method of producing a lithium/manganate composite oxide particulate composition suitable for use as a cathode active substance in a lithium ion secondary cell and to a lithium ion secondarycell using the particulate composition thus obtained as a cathode active substance.

Description of the Prior Art

Lithium/manganese composite oxide is one of materials attracting attention in recent years as a cathode active substance of lithium ion secondary cells used as a high power and high energy density cell, for example, to note book personal computers, PHS (personal handy-phone systems) and portable telephones, etc. Among a group of compounds represented by the general formula $LiMO_2$ (in which M represents Cr, Mn, Ni, Fe, Co or V), the lithium/manganate composite oxide has a particularly high charge/discharge voltage and can be used suitably as a cathode active substance in the same manner or like that $LiCoO_2$, as described, for example, in "Synthesis of Spherical $LiCoO_2$ Fine Powder by Supersonic Spray Decomposition Method and Application to an Active Substance in Lithium Secondary Cell" (T. Ogiwara, Y. Saito, A. Yanagawa, N. Ogata, K. Yoshida, M. Takashima, H. Yonezawa, Y. Mizuno, N. Nagata and K. Ogawa, Journal of Ceramic Society of Japan, Vol. 101, pp 1159-1163 (1993)). In addition, since manganese which is abundant in resource and inexpensive is used for $LiMnO_2$, it is outstandingly advantageous over $LiCoO_2$ in view of the producing cost.

Heretofore, as a method of producing $LiMnO_2$, there has been known a dry heating method of dry mixing $Li_2MnO_3$ and MnO at an equimolar ratio and sintering the mixture in an inert gas at a high temperature, or a dry heating method of mixing lithium hydroxide and manganese oxyhydroxide (MnOOH) at an equimolar ratio and sintering in an inert gas at a high temperature as described in Japanese Patent Application Laid-open No. 242889/1993. However, in the conventional dry heating methods, since the sintering atmosphere is restricted to an oxygen free inert gas atmosphere such as a nitrogen gas stream and, in addition, high temperature is required for sintering, they are disadvantageous as industrial production methods. Further, the latter method involves a problem also in that expensive manganese oxyhydroxide is used as the starting material.

On the other hand, a wet heating method of obtaining $LiMnO_2$ by hydrothermal reaction of lithium hydroxide and manganese oxyhydroxide with a large excess of lithium hydroxide is described by M. Tabuchi et al. in "Solid State Ionics", Vol. 89, pp. 53-63 (1996). However, this method also involves a problem in using an expensive manganese oxyhydroxide as the starting material.

The present invention has been achieved for overcoming the foregoing problems in the production of lithium/manganate composite oxide particulate composition of the prior art and it is an object thereof to provide a method capable of easily obtaining a lithium/manganate composite oxide particulate composition having a uniform composition by a wet heating method using an inexpensive starting material, not requiring sintering at a high temperature for starting mixture and not using expensive manganese oxyhydroxide as the starting material as in the dry heating method, as well as it is an object thereof to provide a lithium ion secondary cell of high performance using the lithium/manganate composite oxide particulate composition described above as a cathode active substance.

Summary of the Invention

The invention provides a method of producing a lithium/manganate composite oxide particulate composition comprises heating at least one manganese compound selected from a manganese oxide represented by the general formula (I):

$$MnO_y \cdot zH_2O$$

wherein y represents a rational number of 1 to 2 and z represents a rational number of 0 to 1, excluding a case in which y=3/2 and Z=1/2, and a basic manganese carbonate represented by the general formula (II):

$$Mn(OH)_a(CO_3)_b$$

wherein a represents rational number of 0 to 2 and b represents a rational number of 0 to 1, in an aqueous solution of lithium hydroxide and then separating the same from the aqueous solution.

The invention further provides a lithium ion secondary cell which comprises the thus obtained lithium/manganate composite oxide particulate composition as a cathode active substance.

Brief Description of the Drawings

Fig. 1 is a cross sectional view illustrating an example of a lithium ion secondary cell.
Fig. 2 is an electron microscopic photograph (magnification factor: 1000) for an example of a lithium/manganate composite oxide particulate composition obtained in accordance with the method of the present invention.
Fig. 3 is an X-ray diffraction chart for a lithium/manganate composite oxide particulate composition obtained in accordance with the method of the invention.

Explanation for Preferred Mode of the Invention

According to the present invention, a particulate composition of a lithium/manganate composite oxide, that is, lithium manganate can be obtained by dispersing at least one manganese compound selected from the manganese oxide represented by the general formula (I) and a basic manganese carbonate represented by the general formula (II) into an aqueous solution of lithium hydroxide, heating and, separating the same from the aqueous solution by filtration or like other means, applying heating if necessary and then drying the same. The thus obtained particulate composition comprises a lithium/manganate composite oxide represented by $LiMnO_2$, which is a particulate composition having an orthorhombic crystal structure. The X-ray diffraction pattern agrees with $LiMnO_2$ described in JCPDS card No. 35-749.

In the method according to the invention, the manganese oxide represented by the general formula (I) includes, for example, various oxides such as manganese monoxide (MnO), dimanganese trioxide ($Mn_2O_3$), trimanganese tetroxide ($Mn_3O_4$) and manganese dioxide ($MnO_2$). They are available at a reduced cost as commercial products. Various manganese oxides described above can be obtained easily by applying heat treatment to manganese carbonate, manganese dioxide, manganese hydroxide or the like if necessary. Further, the basic manganese carbonate represented by the general formula (II) includes so-called basic manganese carbonate, as well as manganese carbonate ($MnCO_3$).

The manganese compound used in the present invention preferably has an average atom balance of manganese within a range from 2.9 to 3.3, particularly, from 2.9 to 3.1. If the average valence of manganese in the manganese compound used is 2.9 or less, a great amount of $Mn_3O_4$ is mixed together in the lithium/manganate composite oxide ($LiMnO_2$) thus formed and no sufficiently high charge/discharge capacity can be obtained even when such composite oxide is used as a positive electrode active substance of a lithium ion secondary cell. On the other hand, if the average valence of manganese in the manganese compound used is 3.3 or more, a great amount of $Li_2MnO_3$ is mixed together in the thus formed lithium/manganate composite oxide ($LiMnO_2$) and, also in this case, no sufficiently high charge/discharge capacity can be obtained even when it is used as a positive electrode active substance for a lithium ion secondary cell.

The average valence $V_{av}$ of manganese in the manganese compound used in the invention when using manganese compounds a, b, c, ... in admixture each Na mol, Nb mol, Nc mol, ... respectively, being expressed as manganese atoms, is defined as:

$$V_{av} = \frac{Na \times Va + Nb \times Vb + Nc \times Vc + ...}{Na + Nb + Nc + ...}$$

where each of Va, Vb and Vc represents the valence of manganese in each of the manganese compounds.

Accordingly, when a mixture of 1 mol of trimanganese tetroxide ($Mn_3O_4$) and 1 mol of manganese dioxide ($MnO_2$) is used, for example, since the valence of manganese in trimanganese tetroxide is 8/3, one mol of trimanganese tetroxide corresponds to 3 mol being expressed as manganese atom, the valence of manganese in manganese dioxide is 4 and one mol of manganese dioxide corresponds to 1 mol being expressed as manganese atom, the average valence of manganese in the mixture of the manganese compounds is: $[ \{(8/3) \times 3 + 4 \times 1 \}/(3 + 1)]=3$.

Further according to the invention, when the thus obtained lithium/manganate composite oxide particulate composition is used as a cathode active substance of a lithium ion secondary cell, the manganese oxide represented by the general formula (I) and the basic manganese carbonate represented by the general formula (II) may also be a composite manganese compound in which a portion of manganese atoms is replaced with at least one atom selected from the group consisting of B, Mg, Al, Si, Sc, Ti, V, Cr, Fe, Co, Ni, Cu, Zn, Ga, Y, Zr, Nb, Mo, Ru, Sn, Sb, La, Ce, Pr, Nd, Hf, Ta and Pb (hereinafter referred to as substituent atoms) with an aim of improving the characteristic of the cell. The substitution amount of manganese atoms by the substituent atoms in the composite manganese compound is usually within a range of 25 mol% or less and, preferably, within a range from 0.1 to 25 mol%.

For example, a composite manganese carbonate in which 20 mol% of manganese atoms is substituted for cobalt (manganese cobalt carbonate) can be obtained by preparing an aqueous solution of a mixture comprising a 80 mol% manganese compound being expressed by manganese atom and a 20 mol% cobalt compound being expressed by cobalt atom and then carbonating the same.

According to the invention, a lithium/manganate composite oxide particulate composition is obtained by dispersing the manganese compound in an aqueous solution of lithium hydroxide, heating, preferably, under stirring, then separating the same from the aqueous solution, applying heating as required, and then drying. According to the invention, since the manganese compound is heated in the aqueous solution of lithium hydroxide as described above, this heating may sometimes be referred to as wet heating for distinguishing it from heating in the conventional dry heating method (dry heating).

The aqueous solution of lithium hydroxide mentioned herein means an aqueous solution containing lithium ions and hydroxy ions in the aqueous solution and such an aqueous solution of lithium hydroxide can be prepared, for example, by dissolving a compound capable of forming lithium ions and hydroxy ions in water, for example, lithium hydroxide, lithium oxide and lithium metal into water. Thus, in the invention, the aqueous solution of lithium hydroxide means the aqueous solution that is prepared by dissolving a compound capable of forming lithium ions and hydroxy ions in water.

There is no particular restriction on the ratio of lithium hydroxide to the manganese compound and it is usually 1 or more and, preferably, within a range from 1 to 20 as Li/Mn atom ratio. Further, in a liquid dispersion formed by dispersing the manganese compound in the aqueous solution of lithium hydroxide, there is no particular restriction on the concentration of the manganese compound and it is usually within a range from 0.05 to 10 mol/l and, preferably, within a range from 0.1 to 5 mol/l in view of easy handlability of the liquid dispersion and economy.

The liquid dispersion in which the manganese compound is dispersed in the aqueous solution of lithium hydroxide described above may further contain a compound capable of forming hydroxy ions. There is no particular restriction on the compound capable of forming the hydroxy ions and there can be mentioned, for example, alkali metal hydroxide such as sodium hydroxide and potassium hydroxide or aqueous ammonia.

When the manganese compound is wet-heated in the aqueous solution of lithium hydroxide, the temperature is usually within a range preferably from 90 to 500°C. If the heating temperature is lower than 90°C, unnecessarily long time is required for completing an aimed reaction whereas, if it exceeds 500°C, a steam pressure becomes extremely high to require extremely expensive apparatus for ensuring pressure resistance of a reaction vessel, any of which results in economical problem to adopt as an industrial producing method. In view of the working efficiency or economy, the heating temperature is preferably within a range from 100 to 374°C (critical temperature of water) and, more preferably, within a range from 150 to 300°C.

If the temperature in the wet heating exceeds 100°C, it is necessary to use an autoclave for the reaction vessel for suppressing boiling of the aqueous dispersion. Further, while the heating time is different depending on the temperature, it is usually within a range from several minutes to several days. The reaction conducted under the presence of water at such high temperature and high pressure is generally referred to as hydrothermal reaction.

According to the invention, an aimed particulate composition can be obtained as a powder by heating the manganese compound in the aqueous solution of lithium hydroxide, then cooling thus obtained reaction mixture, and separating thus obtained lithium/manganate composite oxide particles from water by an appropriate separation means such as filtration, washing them thoroughly with water and heating and drying the same. There is no particular restriction on the temperature for drying the obtained lithium/manganate composite oxide particles so long as water adsorbed or deposited on the composition can be removed sufficiently and it is usually within a range from 80°C to 150°C. Depending on the case, they may be heated and dried while saving water washing. An atmosphere for heating and drying may usually be air.

Further according to the invention, in order to improve the degree of crystallinity of the thus obtained lithium/manganate composite oxide particles or control the size of primary particles or secondary particles to obtain a particulate composition satisfying desired cell characteristics, the resultant lithium/manganate composite oxide particles may optionally be dry-heated at a temperature higher than 150°C, that is, they may be sintered. The dry heating may be conducted separately as described above after separating the thus obtained lithium/manganate composite oxide particles from water, washing with water, heating and then drying them, or it may be conducted also for drying. In the dry heating, an inert gas atmosphere such as of nitrogen or argon may be adopted in addition to air if necessary.

The liquid phase after separating the resultant lithium/manganate composite oxide particles after the hydrothermal reaction can he optionally recovered and reutilized.

In the method of mixing and dry-heating the starting materials of the prior art, since sintering at high temperature is necessary, particles are fused to each other in the obtained composite oxide particulate composition and, accordingly, it requires a pulverizing step and, in addition, the obtained pulverizates have drawback in that they are not uniform in the grain size and the form, and show poor packing efficiency and low packing density. However, in the method according to the invention, since the starting material is preferably heated by the hydrothermal reaction, then the obtained composite oxide is heated and dried at a relatively low temperature, composite oxide particle are not fused

EP 0 959 044 A1

to each other and, therefore, a particulate composition with a narrow grain size distribution can be obtained without pulverizing the resultant particles after drying.

That is, according to the method of the invention, a particulate composition having uniform composition, and excellent in the uniformness of the crystal structure can be obtained. Further, even if it is necessary for crushing the drying products to such an extent as not destroying the particles after drying, they can be crushed easily.

The lithium ion secondary cell according to the invention uses the thus obtained lithium/manganate composite oxide particulate composition as a positive electrode active substance.

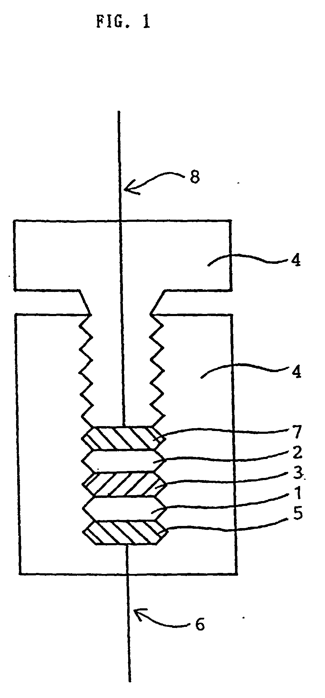

Fig. 1 shows an example of a lithium ion secondary cell using a non-aqueous electrolyte (organic electrolyte). A cathode 1 and an anode 2 are contained being opposed to each other in a cell casing 4 by way of a separator 3 impregnated with a non-aqueous electrolyte, in which the cathode 1 is connected by way of a cathode collector 5 to a cathode lead wire 6 while the anode 2 is connected with an anode lead wire 8 by way of an anode electrode collector 7, so that chemical energy produced in the cell can be taken out to the outside from the lead wires 6 and 8 as electric energy.

The lithium/manganate composite oxide particulate composition of the invention is blended with a conductive material, a binder and a filler and compounded into a paste, which is coated and press-fitted to a cathode collector comprising, for example, a stainless steel mesh, and heated and dried under a reduced pressure to form a cathode. If necessary, the paste may be molded under pressure into an appropriate shape such a disc and, optionally, applied with a heat treatment under vacuum to fabricate a cathode.

There is no particular restriction on the conductive material so long as it is an electron conductive material not causing chemical change in a lithium ion secondary cell and there can be mentioned, for example, natural graphite, artificial graphite, carbon black, acetylene black, "Ketjen" black, carbon fiber, metal powder and metal fiber, as well as electroconductive polymeric material such as polyphenylene derivatives. They may be used alone or if necessary, two or more of them may be used in combination. There is no particular restriction on the blending amount of the conductive material in the paste and it is usually within a range from 1 to 50% by weight and, preferably, within a range from 2 to 30% by weight.

There is no particular restriction also on the binder, and the binder can include, for example, starch, polyvinyl alcohol, carboxymethyl cellulose, hydroxypropyl cellulose, regenerated cellulose, diacetyl cellulose, polyvinyl chloride, polyvinyl pyrrolidone, polytetrafluoroethyelene, polyvinylidene fluoride, polyethylene, polypropylene, ethylene-propylene-diene copolymer (EPDM), sulfonated EPDM, styrene-butadiene rubber, polybutadiene, fluoro rubber and polyethylene oxide. Also they may be used alone or, optionally, two or more of them may be used in combination.

There is no particular also restriction on the blending amount of the binder and it is usually within a range from 1 to 50% by weight and, preferably, within a range from 2 to 30% by weight in the paste.

The filler is optionally blended to the paste. There is no particular restriction on the filler so long as it is fibrous material not causing chemical change in the lithium ion secondary cell and there can be mentioned, for example, fibers of polyolefinic polymers such as polypropylene and polyethylene, glass and carbon. There is also no particular restriction also on the blending amount of the filler in the paste and usually it is within a range preferably from 0 to 30% by weight.

In the lithium secondary cell according to the invention, there is no particular restriction on the negative electrode so long as it is used for lithium ion secondary cell in the prior art and it can be mentioned, for example, sheet-like products, for example, foils or molded products made of lithium, lithium alloy, stainless steel, nickel, copper, titanium, aluminum or sintered carbon.

The cathode and the anode are usually formed on the collectors. There is no particular restriction on the collector and stainless steel or mesh made therewith is usually used.

Furthermore, any of known non-aqueous electrolytes may be used and there can be mentioned, for example, those formed by dissolving dissociating lithium salts such as lithium perchrolate or lithium hexafluorophosphate in an organic solvent such as propylene carbonate, sulfolanes, lactones and ethers, for example, 1,2-methoxyethane. As the separator, a porous film comprising a synthetic olefinic high molecular olefinic polymer such as polyethylene or polypropylene is used, with no particular restriction only to them.

Industrial Applicability

As described above, according to the invention, a lithium/manganate composite oxide particulate composition having a narrow grain size distribution and a uniform composition can be obtained with ease by dispersing and heating the manganese oxide represented by said general formula (1) or the basic manganese carbonate represented by said general formula (2) described above in an aqueous solution of lithium hydroxide and then, preferably, after hydrothermal reaction, filtering and drying the same.

Particularly, according to the invention, the inexpensive manganese dioxide or basic manganese carbonate is used and, in addition, it is not necessary to sinter the starting material at high temperature, so that the composition is uniform, and in the uniformness of the crystal structure is excellent and, in addition, the resultant particles are not fused to each other.

Furthermore, since it is not necessary to make the lithium/manganate atom ratio in great excess, a lithium/manganate composite oxide particulate composition can be easily obtained at a reduced cost.

Accordingly, a high performance lithium ion secondary cell of high charge/discharge capacity can be obtained at a reduced cost by using the lithium/manganate composite oxide particulate composition as the positive electrode active substance.

The lithium ion secondary cell according to the invention can be used suitably to electronic equipments, for example, note book personal computers, portable telephones, cordless sub-phones, video movies, liquid crystal television sets, electric shavers, portable radios, stereophonic headphones, backup power sources and memory cards, as well as medical equipments such as pace makers or hearing aids.

Examples

The present invention will now be described with reference to examples, but the invention is not limited to the examples.

Example 1

0.1 mol of commercially available dimanganese trioxide and 5 mol of lithium hydroxide were mixed and the mixture was added to ion exchanged water to make up the total amount to 1 liter. The slurry was charged into an autoclave, and put to a hydrothermal reaction by heating at a temperature of 100°C for 96 hours.

After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Example 2

Commercially available manganese carbonate was heated in a nitrogen gas stream at a temperature of 500°C for 8 hours to obtain manganese monoxide. 0.50 mol of manganese monoxide, 0.50 mol of manganese dioxide (average valence of manganese: 3.0) and 5 mol of lithium hydroxide were mixed, the mixture was added to ion exchanged water to make up the total amount to 1 liter. The slurry was charged into art autoclave and put to a hydrothermal reaction by heating at a temperature of 150°C for 24 hours.

After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Example 3

1 mol of commercially available manganese carbonate, 1 mol of manganese dioxide (average valence of manganese: 3.0) and 6 mol of lithium hydroxide were mixed and the mixture was added to an ion exchanged water to make up the total amount to 1 liter. The slurry was charged into an autoclave and put to hydrothermal reaction by heating at a temperature of 200°C for 12 hours.

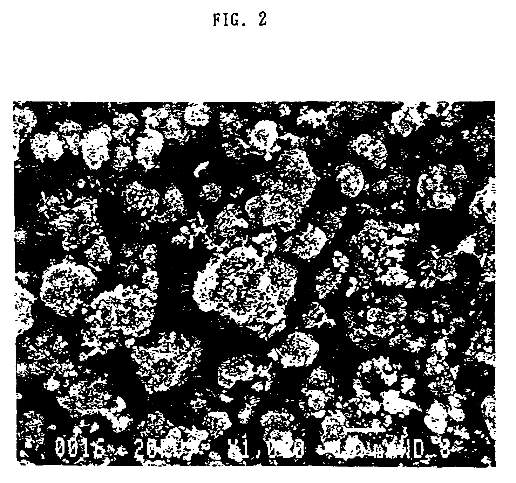

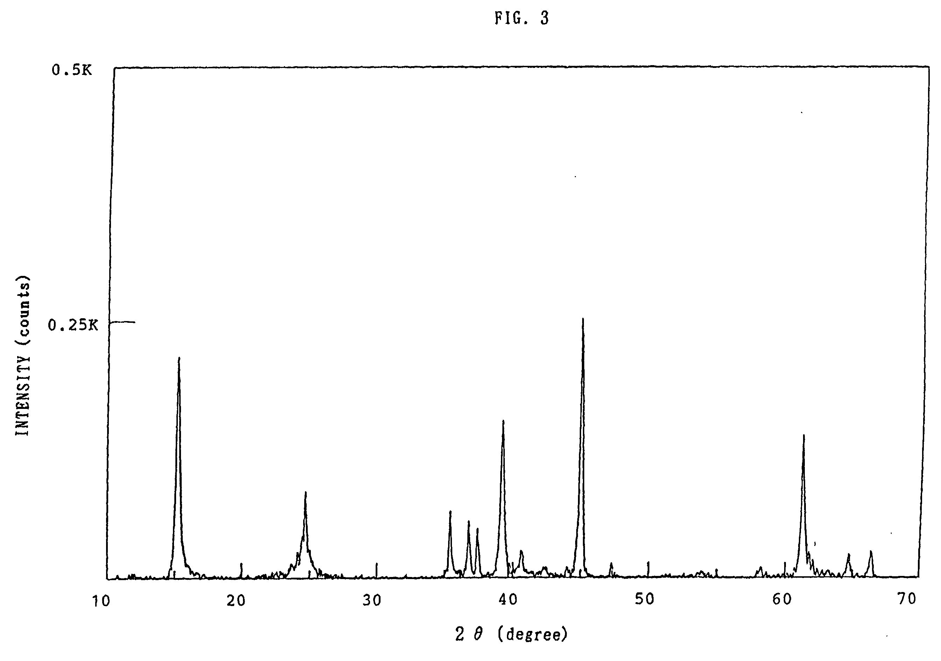

After the completion of the hydrothermal reaction, the slurry was filtered, washed with water and dried at 100°C to obtain a lithium/manganate composite oxide particulate composition as a powder. The electron microscopic photograph (magnification factor: 1,000) for the lithium/manganate composite oxide is shown in Fig. 2. Further, the X-ray diffraction pattern of the thus obtained lithium/manganate composite oxide agreed with that of lithium manganate ($LiMnO_2$) as shown in Fig. 3.

Example 4

Commercially available manganese dioxide was sintered in air at a temperature of 850°C for 3 hours to obtain dimanganese trioxide. 3 mol of dimanganese trioxide and 6 mol of lithium hydroxide were mixed and the mixture was added to ion exchanged water to make up the total amount to 1 liter. The slurry was charged into an autoclave and put to hydrothermal reaction by heating at a temperature of 250°C for 4 hours.

After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Example 5

Commercially available manganese dioxide was sintered in air at a temperature of 1050°C for 3 hours to obtain trimanganese tetroxide. 1.25 mol of trimanganese tetroxide, 1.25 mol of manganese dioxide (average valence of manganese: 3.0) and 6 mol of lithium hydroxide were mixed and the mixture was added to ion exchanged water to make up the total amount to 1 liter. The slurry was charged into an autoclave and put to hydrothermal reaction by heating at a temperature of 300°C for 2 hours.
After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Example 6

1.1 liter of 2 mol/l aqueous solution of sodium hydroxide was added dropwise to one liter of 1 mol/l aqueous solution of manganese nitrate with stirring to provide a slurry containing precipitates. The precipitates were collected by filtration, washed with water, dried and then calcined at a temperature of 850°C for 3 hours to obtain dimanganese trioxide.
8 mol of the dimanganese trioxide and 8 mol of lithium hydroxide were mixed and the mixture was added to ion exchanged water to make up the total amount to 1 liter. The slurry was charged into an autoclave and put to hydrothermal reaction by heating at atemperature of 350°C for 1 hour.
After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Example 7

1 mol of commercially available manganese carbonate, 1 mol of manganese dioxide (average valence of manganese: 3.0) and 6 mol of lithium hydroxide were mixed and the mixture was added to an ion exchanged water to make up the total amount to 1 liter. The slurry was charged into an autoclave and put to hydrothermal reaction by heating at a temperature of 200°C for 5 hours.
After the completion of the hydrothermal reaction, the slurry was filtered, water washed and dried at 100°C to obtain a lithium/manganate composite oxide particulate composition as a powder. 10 g of the powder of lithium/manganate composite oxide was placed in a crucible of alumina and dry-heated at a temperature of 150°C for 10 hours under an air atmosphere in an electric oven. The resulting powder was non-fusing and the X-ray diffraction pattern agreed with that of lithium manganate ($LiMnO_2$).

Example 8

An aqueous solution of a mixture composed of a manganese compound in an amount of 80 mol% in terms of manganese atoms and a cobalt compound in an amount of 20 mol% in terms of cobalt atoms was prepared. The solution was carbonized to obtain a composite manganese carbonate in which 20 mol% of manganese atoms was replaced by cobalt atoms.
The composite manganese carbonate was sintered at a temperature of 850°C for 4 hours to obtain composite dimanganese trioxide. 1 mol of composite dimanganese trioxide and 2 mol of lithium hydroxide were mixed and the resultant mixture was added to ion exchanged water to make up the total amount to 1 liter. The slurry was charged into an autoclave and put to hydrothermal reaction by heating at a temperature of 250°C for 4 hours.
After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Example 9

An aqueous solution of a mixture composed of a manganese compound in an amount of 90 mol% in terms of manganese atoms and an aluminum compound in an amount of 10 mol% in terms of aluminum atoms was prepared. The solution was carbonized to obtain a composite manganese carbonate in which 10 mol% of manganese atoms was replaced by aluminum atoms.
The composite manganese carbonate was sintered at a temperature of 850°C for 3 hours to obtain composite dimanganese trioxide. 3 mol of composite dimanganese trioxide and 4 mol of lithium hydroxide were mixed and the resultant mixture was added to ion exchanged water to make up the total amount to 1 liter. The slurry was charged into an autoclave and put to hydrothermal reaction by heating at a temperature of 250°C for 4 hours.

After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Example 10

An aqueous solution of a mixture composed of a manganese compound in an amount of 95 mol% in terms of manganese atoms and an chromium compound in an amount of 5 mol% in terms of chromium atoms was prepared. The solution was carbonized to obtain a composite manganese carbonate in which 5 mol% of manganese atoms was replaced by chromium atoms.

The composite manganese carbonate was sintered at a temperature of 850°C for 3 hours to obtain composite dimanganese trioxide. 8 mol of composite dimanganese trioxide and 9 mol of lithium hydroxide were mixed and the resultant mixture was added to ion exchanged water to make up the total amount to 1 liter. The slurry was charged into an autoclave and put to hydrothermal reaction by heating at a temperature of 250°C for 4 hours.

After the completion of the hydrothermal reaction, the slurry was filtered, washed with water and dried at 100°C to obtain a lithium/manganate composite oxide particulate composition as a powder. The X-ray diffraction pattern of the powder agreed with lithium manganate ($LiMnO_2$).

Comparative Example 1

1 mol of commercially available manganese oxyhydroxide and 1 mol of lithium hydroxide were dry-mixed and the resultant mixture was placed in a crucible of alumina and calcined at a temperature of 550°C for 10 hours under an argon atmosphere in an electric oven to obtain a lithium/manganese composite oxide particulate composition as a lump composed of particles fusing together. The X-ray diffraction pattern of the powder agreed with lithium manganate ($LiMnO_2$).

The manganese concentrations, lithium/manganate charged atomic ratios, heating temperatures and time for hydrothermal reactions, the conditions when the products were dried, average particle sizes and specific surface areas of the obtained lithium/manganate composite oxide particulate compositions are shown in Table 1.

TABLE 1

| | | Wet heating | | | | Dry heating | | | Particle characteristic | |
|---|---|---|---|---|---|---|---|---|---|---|
| | | Manganese concentration | Li/Mn charged atomic ratio | Heating temperature | Heating time | Heating temperature | Heating time | Atmosphere | Average particle size | Specific surface area |
| | | (mol/l) | | (°C) | (hr) | (°C) | (hr) | | ($\mu$m) | (m²/g) |
| Example | 1 | 0.1 | 50 | 100 | 96 | — | — | — | 1 | 35 |
| | 2 | 1 | 5 | 150 | 24 | — | — | — | 5 | 20 |
| | 3 | 2 | 3 | 200 | 12 | — | — | — | 10 | 11 |
| | 4 | 3 | 2 | 250 | 4 | — | — | — | 10 | 3 |
| | 5 | 5 | 1.2 | 300 | 2 | — | — | — | 30 | 1 |
| | 6 | 8 | 1 | 350 | 1 | — | — | — | 5 | 0.5 |
| | 7 | 2 | 3 | 200 | 5 | 150 | 10 | air | 10 | 8 |
| | 8 | 1 | 2 | 250 | 4 | — | — | — | 5 | 6 |
| | 9 | 3 | 1.33 | 250 | 4 | — | — | — | 10 | 5 |
| | 10 | 8 | 1.125 | 250 | 4 | — | — | — | 20 | 3 |
| Comparative Example 1 | | — | — | — | — | 550 | 10 | argon | — | 5 |

EP 0 959 044 A1

Example 11 (Manufacture of lithium ion secondary cell)

The lithium/manganate composite oxide obtained in Example 7, acetylene black and polytetrafluoroethylene were kneaded sufficiently at a weight ratio of 87:6.5:6.5 to form a paste, which was coated uniformly on a cleaned stainless steel mesh (20 mm diameter) and pressed under a pressure of 200 kg/cm$^2$ and press-bonded. Subsequently, it was heated and dried under a reduced pressure at 150°C for about 17 hours to prepare a cathode. A metallic lithium foil (20 mm diameter, 0.2 mm thickness) was used as an anode and non-woven fabric and finely porous polypropylene film was used as a separator.

Furthermore, a mixed solution (1:1) of propylene carbonate solution containing 1 M of lithium perchrorate and 1,2-dimethoxyethane adjusted to water content of 200 ppm or less was used as an electrolyte and impregnated into the separator. The constituent elements were assembled into a lithium ion secondary cell as shown in Fig. 1.

As a result of charge and discharge at a cell voltage from 4.3 to 2.0 V under a constant current of 0.2 mÅ/cm$^2$, the discharge capacity per unit weight at the third cycle was 190 mÅh/g.

**Claims**

1. A method of producing a lithium/manganate composite oxide particulate composition, which comprises:

   heating at least one manganese compound selected from a manganese oxide represented by the general formula (I):

   $$MnO_y \cdot zH_2O$$

   in which y represents a rational number of 1 to 2 and z represents a rational number of 0 to 1, excluding a case in which y=3/2 and z=1/2, and a basic manganese carbonate represented by the general formula (II):

   $$Mn(OH)_a(CO_3)_b$$

   in which a represents rational number of 0 to 2 and b represents a rational number of 0 to 1, in an aqueous solution of lithium hydroxide and then separating the same from the aqueous solution.

2. A Method of producing a lithium/manganate composite oxide particulate composition as defined in claim 1, wherein the average valence of manganese in the manganese compound is within a range from 2.9 to 3.3.

3. A method of producing a lithium/manganate composite oxide particulate composition as defined in claim 1 or 2, wherein the manganese compound is heated in an aqueous solution of lithium hydroxide, then separated from the aqueous solution, dried and then further sintered at a temperature of not less than 150°C.

4. A method of producing a lithium/manganate composite oxide particulate composition as defined in any one of claims 1 to 3, wherein the manganese compound is heated in the aqueous solution of lithium hydroxide at a temperature in the range of 90 to 500°C.

5. A method of producing a lithium/manganate composite oxide particulate composition as defined in any one of claims 1 to 3, wherein the manganese compound is heated in the aqueous solution of lithium hydroxide at a temperature in the range of 150 to 300°C.

6. A lithium ion secondary cell using the lithium manganese composite oxide particulate composition obtained by the method as defined in any one of claims 1 to 5 as a positive electrode active substance.

FIG. 1

FIG. 2

FIG. 3

EP 0 959 044 A1

## INTERNATIONAL SEARCH REPORT

| International application No. |
|---|
| PCT/JP98/03652 |

**A. CLASSIFICATION OF SUBJECT MATTER**

Int.Cl⁶ C01G45/00, H01M4/58, H01M10/40

According to International Patent Classification (IPC) or to both national classification and IPC

**B. FIELDS SEARCHED**

Minimum documentation searched (classification system followed by classification symbols)

Int.Cl⁶ C01G45/00, H01M4/58, H01M10/40

Documentation searched other than minimum documentation to the extent that such documents are included in the fields searched

| Jitsuyo Shinan Koho | 1926-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| PX | JP, 10-3921, A (Japan Strage Battery Co., Ltd.), 6 January, 1998 (06. 01. 98), Claims ; Par. Nos. [0021], [0029] to [0031] & EP, 813256, A2 | 1-6 |
| X | JP, 5-21063, A (Mitsui Mining & Smelting Co., Ltd.), 29 January, 1993 (29. 01. 93), Claims ; Par. Nos. [0014], [0031] (Family: none) | 1-4, 6 |
| Y | | 5 |
| X | JP, 6-295724, A (Mitsui Mining & Smelting Co., Ltd.), 21 October, 1994 (21. 10. 94), Claims ; Par. Nos. [0012] to [0014] (Family: none) | 1-4, 6 |
| Y | | 5 |
| X | Mitsuharu Tabuchi et al., "Synthesis of $LiMnO_2$ and $LiMnO_{2+x}$ as Positive Electrode Material of Lithium Cells (in Japanese)", Chemistry and Industry, (1 August, 1997), Vol. 50, No. 8 (Tokyo), p.1122-1124 | 1-6 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 10 November, 1998 (10. 11. 98) | 24 November, 1998 (24. 11. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

International application No.

PCT/JP98/03652

C (Continuation). DOCUMENTS CONSIDERED TO BE RELEVANT

| Category* | Citation of document, with indication, where appropriate, of the relevant passages | Relevant to claim No. |
|---|---|---|
| X | M. Tabuchi, et al., "Electrochemical and magnetic properties of lithium manganese oxide spinels prepared by oxidation at low temperature of hydrothermally obtained $LiMnO_2$", Solid State Ionics, (1996), Vol. 89, No. 1/2, p.53-63 | 1-6 |

Form PCT/ISA/210 (continuation of second sheet) (July 1992)